# EUROPEAN PATENT APPLICATION

(11) **EP 4 084 273 A1**
(43) Date of publication of application: **02.11.2022**
(21) Application number: 21170931.6
(22) Date of filing: 28.04.2021
(51) Int. Cl.: H02J 9/06, H01H 50/54

(54) **POWER SUPPLY ASSEMBLY**

(71) Applicant: ABB Schweiz AG, 5400 Baden (CH)
(72) Inventor: Paatero, Esa-Kai, 00380 Helsinki (FI); Antoniazza, Alessandro, 28814 Cambiasca (IT)
(74) Representative: Kolster Oy Ab

(57) **Abstract**

A power supply assembly comprising an alternating current primary source connection (41), a secondary source connection (42), a load connection (71), a primary current supply route (457), a supply switch system (5), and a converter system (8). The primary current supply route (457) electrically conductively connects the primary source connection (41) to the load connection (71). The supply switch system (5) is adapted for disconnecting the primary source connection (41) from the load connection (71). The converter system (8) is adapted for supplying power from the secondary source connection (42) to the load connection (71) during a first converter supply mode. The supply switch system (5) comprises a mechanical circuit breaker (51) whose opening time is short, and in a first supply transition operation, power transmission is transferred from the mechanical circuit breaker (51) directly to the converter system (8).

## Description

### FIELD OF THE INVENTION

The present invention relates to a power supply assembly.

### BACKGROUND OF THE INVENTION

A known uninterruptible power supply (UPS) comprises a converter system adapted to supply a load from a direct current source, and a by-pass route adapted for supplying the load from a primary alternating current supply during an energy saver mode. The by-pass route comprises a supply switch system adapted for connecting and disconnecting the by-pass route. The supply switch system comprises a silicon controlled rectifier (scr). In a fault situation, the uninterruptible power supply is adapted to transfer from the energy saver mode to a first converter supply mode, in which the load is supplied by the converter system. During a transition from the energy saver mode to the first converter supply mode, load is transferred from the silicon controlled rectifier to semiconductor switches of the converter system.

One of the problems associated with the above uninterruptible power supply is energy losses of the silicon controlled rectifier in the supply switch system. A silicon controlled rectifier does have a conduction voltage drop in the order of 1.2- 1.3V.

Another problem associated with the above uninterruptible power supply relates to the fact that a silicon controlled rectifier is a current commutated device. Therefore, during the transition from the energy saver mode to the first converter supply mode a maximum commutation delay of the silicon controlled rectifier is half a period of the primary alternating current supply, for 50Hz alternating current supply that is 10ms. That delay approaches a critical limit for internal holdup for some load devices, thus introducing a possibility of a load dump.

### BRIEF DESCRIPTION OF THE INVENTION

An object of the present invention is to provide a power supply assembly so as to solve the above problems. The objects of the invention are achieved by a power supply assembly which is characterized by what is stated in the independent claim. The preferred embodiments of the invention are disclosed in the dependent claims.

The invention is based on the idea of providing a supply switch system of a power supply assembly with a mechanical circuit breaker whose opening time is very short, and configuring the power supply assembly to transfer power transmission in a first supply transition operation from the mechanical circuit breaker directly to the converter system.

An advantage of the power supply assembly of the invention is a high coefficient of efficiency. A further advantage is a fast transition from the energy saver mode to the first converter supply mode.

### BRIEF DESCRIPTION OF THE DRAWINGS

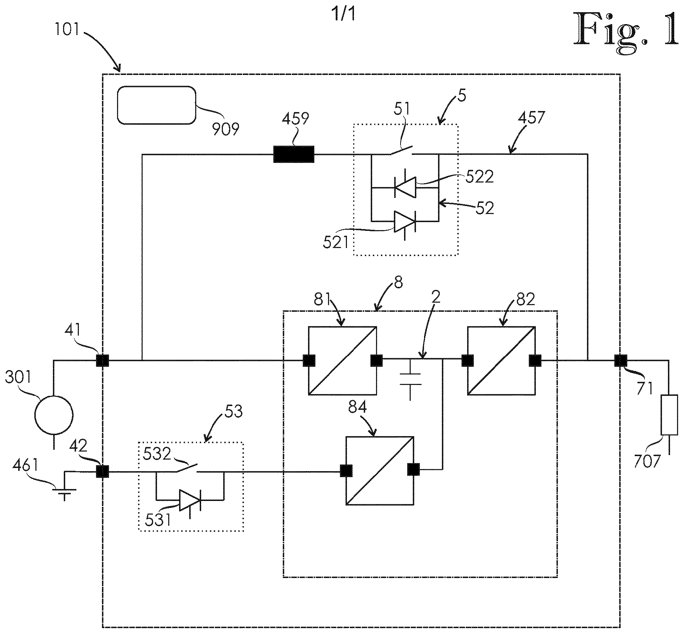

In the following the invention will be described in greater detail by means of preferred embodiments with reference to the attached Figure 1 which shows a connection diagram of a power supply assembly according to an embodiment of the invention.

### DETAILED DESCRIPTION OF THE INVENTION

Figure 1 shows a connection diagram of a power supply assembly 101 comprising a primary source connection 41, secondary source connection 42, a load connection 71, a primary current supply route 457, a supply switch system 5, a converter system 8, a measurement system, and a control system 909.

The primary source connection 41 is adapted to be connected electrically to a primary alternating current supply 301. The secondary source connection 42 is a direct current connection, and is adapted to be connected electrically to a secondary current supply 461. The load connection 71 is adapted to be connected electrically to an alternating current load 707. The primary current supply route 457 electrically conductively connects the primary source connection 41 to the load connection 71, and is adapted for supplying power from the primary source connection 41 to the load connection 71 during an energy saver mode of the power supply assembly 101.

The supply switch system 5 is electrically located in the primary current supply route 457, and is adapted for controllably connecting the primary source connection 41 to the load connection 71, and disconnecting the primary source connection 41 from the load connection 71.

The converter system 8 comprises a load supply converter 82, a DC link 2, a direct current converter 84, and a source side converter 81. The DC link 2 comprises DC link capacitance, and is connected electrically between the source side converter 81 and the load supply converter 82. The load supply converter 82 is connected electrically between the DC link 2 and the load connection 71, the load supply converter 82 being adapted to supply power from the DC link 2 to the load connection 71. The source side converter 81 is connected electrically between the primary source connection 41 and the DC link 2. The direct current converter 84 is connected electrically between the secondary source connection 42 and the DC link 2.

The converter system 8 is electrically connected between the secondary source connection 42 and the load connection 71 such that during a first converter supply mode, the converter system 8 is adapted for supplying power from the secondary source connection 42 to the load connection 71 through the direct current converter 84 and the load supply converter 82.

There is a switch unit 53 connected electrically between the secondary source connection 42 and the direct current converter 84. The switch unit 53 comprises a first switch 531 and a second switch 532 connected in parallel, wherein the first switch 531 has a higher switching speed than the second switch 532, and the second switch 532 has lower conduction losses than the first switch 531. The control system 909 is adapted to control the switch unit 53.

The measurement system is adapted to provide information relating to electrical magnitudes of the power supply assembly 101. In an embodiment, the measurement system is adapted to monitor the electrical magnitudes of the power supply assembly 101 with a time resolution of 2ms or better. As regards a time resolution, a shorter period of time is considered better.

The electrical magnitudes of the power supply assembly 101 comprise voltage and current present at the load connection 71, and voltage and current present at the primary current supply route 457. In an alternative embodiment, the electrical magnitudes of the power supply assembly measured by the measurement system comprise voltage and current present at the load connection, or voltage and current present at the primary current supply route.

The control system 909 is adapted to control the supply switch system 5 and the converter system 8. The control system 909 is adapted to provide a first supply transition operation for transferring from the energy saver mode to the first converter supply mode. During the energy saver mode the converter system 8 is in an instant standby state, in which it is adapted to start supplying power to the load connection 71 in less than one millisecond.

The supply switch system 5 comprises a mechanical circuit breaker 51 connected in parallel with a semiconductor switch circuit 52. An opening time of the mechanical circuit breaker 51 is 5ms. The semiconductor switch circuit 52 comprises a first semiconductor switch unit 521, and a second semiconductor switch unit 522 connected antiparallel with each other. The first semiconductor switch unit 521 and the second semiconductor switch unit 522 are controllable switch units adapted to be controlled by the control system 909. The control system 909 is adapted to control the mechanical circuit breaker 51 independently from the semiconductor switch circuit 52.

During the energy saver mode of the power supply assembly 101, the semiconductor switch circuit 52 is in a non-conducting state. Further, during the first converter supply mode of the power supply assembly 101, the semiconductor switch circuit 52 is in a non-conducting state.

In an embodiment, the first semiconductor switch unit, and the second semiconductor switch unit comprise IGBTs. In alternative embodiments, the first semiconductor switch unit, and the second semiconductor switch unit comprise for example thyristors or GTOs.

In an alternative embodiment, an opening time of the mechanical circuit breaker is less than or equal to 10ms. Herein, a term "mechanical circuit breaker" includes all feasible devices capable of disconnecting current present in the primary current supply route, including a contactor and a relay.

In the first supply transition operation, the control system 909 is adapted to control the mechanical circuit breaker 51 to a non-conducting state, and subsequently to control the converter system 8 to an active load supplying state such that a control time difference between said control operations is 10ms. In an alternative embodiment, a control time difference between said control operations is less than or equal to 5ms.

The control time difference is a difference between a control signal for the mechanical circuit breaker 51, and a control signal for the converter system 8. A reason for this control time difference is an intention to prevent or at least minimize an overlapping time during which the converter system 8 is in the active load supplying state while the mechanical circuit breaker 51 is still in the conducting state. Basically, a control time difference between said control operations is in many cases advantageous since controllable semiconductor switches in the converter system are faster than any currently available mechanical circuit breakers.

In an alternative embodiment, in the first supply transition operation, the control system is adapted to control the mechanical circuit breaker to a non-conducting state, and subsequently to control the converter system to an active load supplying state such that a control time difference between said control operations is equal to an operational time difference between an opening time of the mechanical circuit breaker and turn-on time of the converter system from the standby state to the active load supplying state. In a further alternative embodiment, the control time difference between said control operations is less than or equal to said operational time difference plus 5ms.

The control system 909 is also adapted to provide a second supply transition operation for transferring from the first converter supply mode to the energy saver mode. In an embodiment, the semiconductor switch circuit connected in parallel with the mechanical circuit breaker is utilized in the second supply transition operation for accelerating transferring the load to the primary current supply route. In embodiments where the mechanical circuit breaker is capable of transferring fast also from the non-conducting state to the conducting state, the semiconductor switch circuit is not necessary.

The primary current supply route 457 comprises a series inductance 459 whose inductance is 10µH. The series inductance 459 is adapted to limit a back feed during the first supply transition operation, wherein the back feed is a power fed by the converter system 8 to the primary current supply route 457. In an alternative embodiment, the primary current supply route comprises a series inductance whose inductance is greater than or equal to 3µH. In another alternative embodiment, the primary current supply route does not comprise a series inductance, wherein the primary current supply route only comprises an inherent inductance thereof.

The mechanical circuit breaker 51 comprises an electrical boost system for accelerating opening of the mechanical circuit breaker 51 during the first supply transition operation. The electrical boost system is controlled by the control system 909.

In an embodiment, the electrical boost system comprises an electromagnet and/or a coil adapted for transferring the mechanical circuit breaker 51 from a conducting state to a non-conducting state. In an alternative embodiment, the electrical boost system also comprises an electromagnet and/or a coil adapted for transferring the mechanical circuit breaker 51 from a non-conducting state to a conducting state, thereby assisting in the second supply transition operation. In a further alternative embodiment, the electrical boost system comprises an electromagnet and/or a coil adapted both for transferring the mechanical circuit breaker from a conducting state to a non-conducting state, and from a non-conducting state to a conducting state. Herein, an electrical boost system is a system that accelerates transfer of the mechanical circuit breaker from one state to another by using electromagnetism.

The mechanical circuit breaker 51 comprises an opening spring system adapted for opening of the mechanical circuit breaker, wherein the opening spring system co-operates with the electrical boost system during the first supply transition operation for opening of the mechanical circuit breaker. In an alternative embodiment, the mechanical circuit breaker comprises an opening spring system and no electrical boost system. Naturally, such an embodiment requires very strong spring system. In further alternative embodiment, the mechanical circuit breaker does not comprise any opening spring system.

The control system 909 is adapted to provide the first supply transition operation as a response to a fault situation. In an alternative embodiment, the control system is adapted to provide the first supply transition operation in a normal operating situation, wherein the first supply transition operation is simply a means to transfer from one supply mode to another.

The control system 909 is adapted to detect the fault situation based on information provided by the measurement system. In an embodiment, the control system is adapted to detect the fault situation when the voltage present at the primary current supply route is out of a predefined tolerance and/or the current present at the primary current supply route is out of a predefined tolerance.

The power supply assembly 101 comprises only one secondary source connection. In an alternative embodiment, the power supply assembly comprises a plurality of secondary source connections electrically connected to the converter system.

In an embodiment, the power supply assembly comprises two alternating current connections such that the source side converter is adapted to be connected electrically to a different alternating current supply than the primary current supply route. In this embodiment, the alternating current connection connected electrically to the source side converter is adapted to function as the secondary source connection such that the converter system is adapted for supplying power from said alternating current connection to the load connection during the first converter supply mode. In other words, the secondary source connection can comprise a direct current connection and/or an alternating current connection.

It will be obvious to a person skilled in the art that the inventive concept can be implemented in various ways. The invention and its embodiments are not limited to the examples described above but may vary within the scope of the claims.

## Claims

1. A power supply assembly comprising:
a primary source connection (41) adapted to be connected electrically to a primary alternating current supply (301);
a secondary source connection (42) adapted to be connected electrically to a secondary current supply (461);
a load connection (71) adapted to be connected electrically to an alternating current load (707);
a primary current supply route (457) electrically conductively connecting the primary source connection (41) to the load connection (71), wherein the primary current supply route (457) is adapted for supplying power from the primary source connection (41) to the load connection (71) during an energy saver mode;
a supply switch system (5) electrically located in the primary current supply route (457), and adapted for disconnecting the primary source connection (41) from the load connection (71);
a converter system (8) electrically connected between the secondary source connection (42) and the load connection (71), and adapted for supplying power from the secondary source connection (42) to the load connection (71) during a first converter supply mode;
a measurement system adapted to provide information relating to electrical magnitudes of the power supply assembly (101), the electrical magnitudes of the power supply assembly (101) comprising voltage and current present at the load connection (71), and/or voltage and current present at the primary current supply route (457); and
a control system (909) adapted to control the supply switch system (5) and the converter system (8), wherein the control system (909) is adapted to provide a first supply transition operation for transferring from the energy saver mode to the first converter supply mode,
**characterized in that** the supply switch system (5) comprises a mechanical circuit breaker (51) whose opening time is less than or equal to 10ms, and in the first supply transition operation, power transmission is transferred from the mechanical circuit breaker (51) directly to the converter system (8).

2. The power supply assembly according to claim 1, wherein in the first supply transition operation, the control system (909) is adapted to control the mechanical circuit breaker (51) to a non-conducting state, and subsequently to control the converter system (8) to an active load supplying state such that time difference between said control operations is less than or equal to 10ms.

3. The power supply assembly according to claim 1, wherein in the first supply transition operation, the control system (909) is adapted to control the mechanical circuit breaker (51) to a non-conducting state, and subsequently to control the converter system (8) to an active load supplying state such that a control time difference between said control operations is less than or equal to an operational time difference plus 5ms, wherein the operational time difference is a difference between an opening time of the mechanical circuit breaker (51) and turn-on time of the converter system (8) from the standby state to the active load supplying state.

4. The power supply assembly according to any one of claims 1 to 3, wherein the primary current supply route (457) comprises a series inductance (459) whose inductance is greater than or equal to 3µH.

5. The power supply assembly according to any one of the preceding claims, wherein the mechanical circuit breaker (51) comprises an electrical boost system for accelerating opening of the mechanical circuit breaker (51) during the first supply transition operation, the electrical boost system being controlled by the control system (909).

6. The power supply assembly according to claim 5, wherein the electrical boost system comprises an electromagnet and/or a coil adapted for transferring the mechanical circuit breaker (51) from a conducting state to a non-conducting state.

7. The power supply assembly according to claim 5 or 6, wherein the mechanical circuit breaker (51) comprises an opening spring system adapted for opening of the mechanical circuit breaker, wherein the opening spring system co-operates with the electrical boost system during the first supply transition operation for opening of the mechanical circuit breaker.

8. The power supply assembly according to any one of the preceding claims, wherein the control system (909) is adapted to provide the first supply transition operation as a response to a fault situation.

9. The power supply assembly according to claim 8, wherein the control system (909) is adapted to detect the fault situation based on information provided by the measurement system.

10. The power supply assembly according to claim 9, wherein the control system (909) is adapted to detect the fault situation when the voltage present at the primary current supply route (457) is out of a predefined tolerance and/or the current present at the primary current supply route (457) is out of a predefined tolerance.

11. The power supply assembly according to any one of the preceding claims, wherein the measurement system is adapted to monitor the electrical magnitudes of the power supply assembly (101) with a time resolution of 2ms or better.
